(19) Europäisches Patentamt
European Patent Office
Office européen des brevets

(11) Veröffentlichungsnummer : **0 379 724 B1**

(12)

# EUROPÄISCHE PATENTSCHRIFT

(45) Veröffentlichungstag der Patentschrift :
**24.02.93 Patentblatt 93/08**

(51) Int. Cl.$^5$ : **C08F 210/02,** C08F 2/00,
// (C08F210/02, 220:04,
220:12)

(21) Anmeldenummer : **89123925.3**

(22) Anmeldetag : **27.12.89**

(54) **Verfahren zur Herstellung von Copolymerisate aus Ethylen mit Alkencarbonsäuren oder Gemisch dieser Monomeren.**

(30) Priorität : **28.12.88 DE 3844047**

(43) Veröffentlichungstag der Anmeldung :
**01.08.90 Patentblatt 90/31**

(45) Bekanntmachung des Hinweises auf die
Patenterteilung :
**24.02.93 Patentblatt 93/08**

(84) Benannte Vertragsstaaten :
**AT BE DE ES FR GB IT NL**

(56) Entgegenhaltungen :
**EP-A- 0 245 773**
**DE-A- 1 520 227**
**DE-A- 1 645 639**

(56) Entgegenhaltungen :
**DE-A- 2 322 553**
**DE-A- 3 404 742**
**FR-A- 2 118 430**
**US-A- 3 520 861**

(73) Patentinhaber : **BASF Aktiengesellschaft**
**Carl-Bosch-Strasse 38**
**W-6700 Ludwigshafen (DE)**

(72) Erfinder : **Hasenbein, Norbert, Dr.**
**Neuoettinger Strasse 4**
**W-6716 Dirmstein (DE)**
Erfinder : **Mühlenbernd, Thomas, Dr.**
**Siegelsmauer 3 a**
**W-6900 Heidelberg (DE)**
Erfinder : **Köhler, Gernot, Dr.**
**Calvinstrasse 7 c**
**W-6520 Worms 1 (DE)**

EP 0 379 724 B1

## Beschreibung

Die vorliegende Erfindung betrifft ein Verfahren wie beschrieben in Anspruch 1, bevorzugt ein Verfahren zur Herstellung von Copolymerisaten aus 96 bis 99,6 mol% Ethylen und 0,4 bis 4 mol-% einer $C_3$-$C_6$-Alkencarbonsäure oder einem Ester diese Säure mit insgesamt bis zu 14 C-Atomen oder Gemischen dieser Monomeren, durch Polymerisation in einem kontinuierlich betriebenen Rohrreaktor bei Drücken von 500 bis 5000 bar und erhöhter Temperatur in Gegenwart radikalisch zerfallender Initiatoren durch Zugabe eines Gemisches der gennanten Reaktionskomponenten nur an der Einlaßstelle des Rohrreaktors, wobei man die Temperatur in einem ersten Reaktionsabschnitt auf etwa 240°C begrenzt, nach Absinken der Temperatur um 5 bis 20°C am Beginn eines zweiten Reaktionsabschnitts weiteren Initiator zudosiert und die Reaktion bei Temperaturen bis zu 300°C zu Ende führt.

Copolymerisate des Ethylens mit carboxylgruppenhaltigen Comonomeren sind in einer Reihe von Patentschriften bereits beschrieben worden. Ihre Herstellung erfolgt entweder in Rührautoklaven (US-A 3 520 861, US-A 4 351 931), oder in rohrförmigen Reaktoren (DE-A 3 404 742, DE-A 3 404 743, DE-A 3 404 744 und DE-A 1 952 693) unter erhöhtem Druck, wobei eine beträchtliche Reaktionswärme entsteht, welche zum Teil vom Reaktionsgemisch aufgenommen wird, oder durch entsprechende Kühlvorrichtungen nach außen abgeführt werden muß.

Bei einigen Verfahren (DE-A 3 404 742, DE-A 3 404 743, DE-A 3 404 744) werden die Reaktionsgemische, welche neben Ethylen und den Comonomeren noch radikalisch zerfallende Initiatoren und gegebenenfalls noch Regler zur Kontrolle der Molmassen enthalten, an mehreren Stellen des Rohrreaktors getrennt eingeleitet. Dadurch kann der Umsatz an Comonomeren deutlich gesteigert werden, was aber mit einem erhöhten technischen Aufwand erkauft werden muß. Die Aufteilung von Gasströmen unter Drücken von mehreren hundert bis zu einigen tausend bar ist apparativ und regelungstechnisch nicht einfach, zumal teilweise auch die Comonomeren je nach Einlaßstelle in unterschiedlichen Konzentrationen zugeführt werden müssen (DE-A 3 404 742). Viele Hochdruckkompressionsanlagen bieten aber nicht die Möglichkeit, Monomerströme exakt aufzuspalten, so daß dieses Verfahren auf ganz spezielle Apparaturen beschränkt bleiben muß.

Des weiteren ist aus DE-A 1 952 693, Seite 2, Absatz 3, bekannt, Ethylencopolymerisate in Rohrreaktoren in der Weise herzustellen, daß das Zudosieren des Initiators von der Ethylenzuführung getrennt an verschiedenen Stellen des Reaktors erfolgt, mit der Maßgabe, daß das Ethylen erst nach entsprechender Initiatorzugabe eingeleitet wird. Auch hier muß, um eine Steigerung des Umsatzes an Comonomeren zu erreichen, ein erheblich höherer technischer Aufwand infolge mehrmaliger Auftrennung der Ethylenzufuhr in Kauf genommen werden. In DE-A 1 952 693 ist ferner ein Verfahren zur Herstellung von Ethylencopolymerisaten in einem Rohrreaktor beschrieben, in welchem das gesamte Reaktionsgemisch nur am Reaktoreingang zugeführt wird, wobei Umsätze von 20 bis 25 % nur dadurch erreicht werden können, daß nach Durchströmen des Reaktionsrohres ein erheblicher Teil des Gemisches wieder in den Reaktor zurückgepumpt werden muß. Dieses Kreislaufverfahren ist jedoch ebenfalls mit einem erheblich höheren apparativen und verfahrenstechnischen Aufwand verbunden.

Unterläßt man die Trennung der Stoffströme bzw. die Rückführung des Reaktionsgemisches und führt statt dessen das Verfahren in technisch weniger aufwendigen Rührautoklaven oder Einzonenreaktoren durch, so werden die Comonomeren nur in relativ geringem Umfang in das entstehende Produkt eingebaut (DE-A 3 404 742, Seite 2, Absatz 2), was eine Verschlechterung der mechanischen Eigenschaften zur Folge hat.

Der vorliegenden Erfindung lag die Aufgabe zugrunde, den geschilderten Nachteilen abzuhelfen und unter Vermeidung von aufwendigen technischen Maßnahmen ein Verfahren zur Herstellung von Copolymerisaten mit ausreichend hohen Anteilen an eingebauten Comonomeren und von hinreichend guter Qualität zugänglich zu machen.

Demgemäß wurden das eingangs definierte Verfahren gefunden.

Das Verfahren wird in einem rohrförmigen Reaktor bei Drücken von 500 bis 5000 bar, vorzugsweise zwischen 1700 und 3500 bar, durchgeführt. Das Reaktionsgemisch aus Ethylen, den Comonomeren und dem Initiator wird ausschließlich an der Einlaßstelle des Reaktors eingeführt, so daß eine Aufspaltung der Stoffströme, wie in DE-A 3 404 742 beschrieben, überflüssig wird. Die Reaktanten werden zweckmäßig zu Beginn unter Luftausschluß auf eine Temperatur über 50°C, bevorzugt über 100°C gebracht, wobei die Reaktion unter Zerfall des Initiators anspringt. Ferner sollte darauf geachtet werden, durch eine entsprechende Wärmeabfuhr mittels einer Kühlflüssigkeit, welche den Außenmantel des Rohrreaktors umspült, einen Anstieg der Temperatur auf mehr als 240°C zu vermeiden. Unter diesen Bedingungen werden bevorzugt die Comonomeren in das Copolymerisat eingebaut, so daß dieses höhere Anteile an Alkencarbonsäuren bzw. deren Esterderivaten im Vergleich zum zugeführten Reaktionsgemisch aufweist. Diese Anreicherung ist auf Reaktivitätsunterschiede zwischen Ethylen einerseits und den Comonomeren andererseits zurückzuführen, welche um so deutlicher zutage treten, je tiefer die Reaktionstemperaturen gehalten werden.

Längs des Rohres wird ein Temperaturprofil eingestellt, wobei zunächst im ersten Reaktionsabschnitt ein Anstieg auf maximal 240°C infolge steigender Wärmetönung bei wachsendem Umsatz zugelassen wird. Das Abklingen der Reaktion kann durch ein Absinken der Reaktortemperatur bei gleichbleibender Wärmeabfuhr verfolgt werden. Beim Erreichen einer um 5 bis 20°C unterhalb des Maximums liegenden Temperatur wird die Reaktion am Beginn eines zweiten Reaktionsabschnitts durch Zudosieren von weiterem Initiator erneut gestartet. Dieser zweite Reaktionsabschnitt ist dadurch gekennzeichnet, daß nur mehr unverbrauchtes Ethylen polymerisiert wird, weil die eingesetzten Comonomeren zum Zeitpunkt der erneuten Initiatorzugabe praktisch vollständig verbraucht sind. Weiterhin sollte durch entsprechende Wärmeabfuhr dafür gesorgt werden, daß in dieser zweiten Reaktionszone die Temperatur infolge der beachtlichen Wärmetönung der Ethylenpolymerisation 300°C nicht überschreitet. Die Gesamtverweilzeit im Rohrreaktor liegt üblicherweise zwischen 40 und 120 Sekunden, vorzugsweise im Bereich von 60 bis 90 Sekunden, wobei sich das Gemisch ungefähr doppelt so lange in der zweiten Zone aufhält wie im ersten Reaktionsabschnitt.

Nach Austragen des Reaktionsgemisches wird das Copolymerisat durch Entspannen von unverbrauchtem Ethylen getrennt und dieses zweckmäßig wieder in den Rohrreaktor zurückgeführt. Im Unterschied zu dem in DE-A 1 952 693 beschriebenen Verfahren wird hier lediglich das noch unverbrauchte Reaktionsgas in den Kreislauf eingespeist, nicht jedoch das gesamte Gemisch.

Als Comonomere eignen sich alle $C_3C_6$-Alkencarbonsäuren, welche unter den angegebenen Bedingungen mit Ethylen copolymerisieren, beispielsweise Acrylsäure, Fumarsäure, Methacrylsäure, Itaconsäure, Aconitsäure, Maleinsäure, Citraconsäure, sowie deren Anhydride. Es können aber auch Mischungen dieser Säuren eingesetzt werden. Die erfindungsgemäßen Alkencarbonsäuren werden am Reaktoreingang dem Ethylen in Konzentrationen von 0,1 bis 0,8 mol% hinzugefügt. Daraus erhält man Copolymerisate mit 0,4 bis 3,0, vorzugsweise 0,8 bis 2,1 mol% an einpolymerisierter Alkencarbonsäure.

Weitere Comonomere sind alle mit Ethylen copolymerisierbaren Ester dieser Säuren mit 4 bis 14 C-Atomen. Bevorzugt verwendet werden dabei die Ester der Acrylsäure mit Alkoholen, welche bis zu 8 C-Atome aufweisen. Besonders geeignet sind die Acrylester von Methanol, Ethanol, Propanol und n-Butanol, sowie Mischungen dieser Ester. Am Eingang des Reaktors werden sie in Konzentrationen von 0,1 bis 0,8 mol% dem Reaktionsgemisch zugegeben. In den daraus erhältlichen Copolymerisaten liegen die Ester in Konzentrationen zwischen 0,4 und 3,2, vorzugsweise im Bereich von 1,0 bis 2,6 mol% vor.

Die Polymerisation wird durch radikalisch zerfallende Initiatoren ausgelöst, welche zweckmäßigerweise am Reaktoreingang dem Gemisch in Konzentrationen von 0,5 bis 10 Mol-ppm, bezogen auf Ethylen, bei erneuter Zugabe zu Beginn des zweiten Reaktionsabschnitts in Konzentrationen von 1 bis 20 Mol-ppm, bezogen auf Ethylen, zugesetzt werden. In Betracht kommen dabei Peroxide, Hydroperoxide oder azogruppenhaltige Verbindungen, sowie Gemische dieser Substanzklassen. Als Beispiele seien genannt: tert.-Butylperpivalat, Di-tert.-butylperoxid, tert.-Butylhydroperoxid, tert.-Butylperbenzoat, Dilauroylperoxid, tert.-Butylperisononanoat, Peroxybenzoesäure, Di-2-ethylhexylperoxydicarbonat, Methylisobutylketonperoxid und Azoisobuttersäurenitril.

Die Molmasse des anfallenden Copolymerisats kann wie üblich durch Zugabe von Reglern kontrolliert werden. Als Regler eignen sich z.B. niedrigsiedende Kohlenwasserstoffe, Ketone oder Aldehyde, wobei bevorzugt Propionaldehyd, Propen oder Buten eingesetzt werden.

Die Copolymerisation wird im allgemeinen in Abwesenheit eines Lösungsmittels durchgeführt, wobei die geringen Mengen von Lösungsmitteln wie Toluol, Isododekan oder Mineralöl, in welchen die Initiatoren gelöst sind, gegenüber den anderen Stoffen vernachlässigt werden können.

Die mit Hilfe des erfindungsgemäßen Verfahrens hergestellten Copolymerisate weisen Schmelzflußindices von 0,1 bis 100 g/10 min., vorzugsweise von 0,2 bis 10 g/10 min. auf, jeweils gemessen nach DIN 53735 bei 190°C und 2,16 kg. Ihre mechanischen Eigenschaften genügen allen praktischen Anforderungen, insbesondere hinsichtlich ihrer möglichen Verwendung als Haftvermittler gegenüber Metallen und Kunststoffen, als Kabelisolierungsmaterial oder zur Herstellung von Folien. Durch die spezielle Ausgestaltung des Verfahrens erhält man Copolymerisate mit einer erhöhten Durchstoßfestigkeit sowie verbesserten optischen Eigenschaften, insbesondere hinsichtlich des Streulichtwertes und des Glanzes.

Daneben zeichnet sich das Verfahren durch eine erheblich einfachere Stoffstromführung und einen geringeren apparativen und regeltechnischen Aufwand aus, da das Auftrennen des Reaktionsgemisches sowie das mehrfache Zudosieren von genau definierten Mengen an Comonomeren entfällt. Deshalb eignet es sich insbesondere für einfachere Hochdruckkompressionsanlagen, bei denen eine Aufspaltung der Stoffströme nicht ohne weiteres möglich ist.

Beispiel

2300 kg/h Ethylen wurden zusammen mit 27 kg/h n-Butylacrylat (0,257 mol%) und 13,7 kg/h Acrylsäure (0,231 mol%) über einen Hochdruckkompressor einem rohrförmigen Reaktor mit einer Länge von 400 Metern und einem Längen-/Durchmesserverhältnis von 20000 bei 165°C zugeführt. Durch Zusatz von 0,9 mol-ppm t-Butylperisononanoat, bezogen auf das eingesetzte Ethylen, ließ sich eine Copolymerisationsreaktion initiieren, wobei die Temperatur des Reaktionsgemisches auf 230°C anstieg. Die während der Polymerisation freiwerdende Wärme wurde teilweise auch durch eine Kühlflüssigkeit, welche den Außenmantel des Reaktors umspült, abgeführt, so daß der Temperaturanstieg im Rohrinneren begrenzt werden konnte. Nach Abkühlen der Mischung auf 220°C infolge Abklingens der Reaktion wurde durch Zugabe von 3,7 mol-ppm Methylisobutylketonperoxid eine Homopolymerisation von Ethylen gestartet, wodurch die Rohrtemperatur auf einen Wert von maximal 300°C anstieg. Dabei erhielt man insgesamt 486,87 kg Copolymerisat, was einem Umsatz von 20,8 % entsprach.

Im Copolymerisat sind 1,30 mol% n-Butylacrylat und 0,97 mol% Acrylsäure eingebaut. Der Schmelzflußindex beträgt 2,1 g/10 min., bei 190°C und 2,16 kg (nach DIN 53735), die übrigen mechanischen und optischen Eigenschaften können der nachstehenden Tabelle entnommen werden. Folien, welche aus diesem Produkt hergestellt werden, zeigen eine ausgezeichnete Transparenz.

Vergleichsversuch

Dabei wurde der gleiche Versuch unter identischen Bedingungen erneut durchgeführt, mit der einzigen Abänderung, daß das gesamte Peroxid am Reaktoreingang eingespeist wurde. Der Tabelle ist dabei zu entnehmen, daß das nach dem erfindungsgemäßen Verfahren hergestellte Copolymerisat eine höhere Durchstoßfestigkeit und bessere optische Eigenschaften aufweist. Das zeigt sich insbesondere an dem geringeren Streulichtanteil einer aus dem Copolymerisat erhältlichen Folie, sowie am höheren Glanzwert.

Tabelle

| | Umsatz (%) | Schmelzfluß- index (g/10 min.) * | Durchstoß- festigkeit (g) ** | Streulicht (%) *** | Glanz **** |
|---|---|---|---|---|---|
| Beispiel | 20,8 | 2,1 | 250 | 79 | 46 |
| Vergleich- versuch | 20,8 | 2,1 | 200 | 84 | 40 |

\*      Bestimmt nach DIN 53735, bei 190°C und 2,16 kg
\*\*     Bestimmt nach ASTM 1709
\*\*\*    Bestimmt nach DIN 53490
\*\*\*\* Bestimmt nach DIN 67530, unter einem Winkel von 60°

**Patentansprüche**

1. Verfahren zur Herstellung von Copolymerisaten des Ethylens mit bis zu 4 mol% an einpolymerisierten $C_3$-$C_6$-Alkencarbonsäuren oder Estern dieser Säuren mit insgesamt bis zu 14 C-Atomen oder Gemischen dieser Monomeren in einem kontinuierlich betriebenen Rohrreaktor bei Drücken von 500 bis 5000 bar und erhöhter Temperatur in Gegenwart radikalisch zerfallender Initiatoren durch Zugabe eines Gemisches der genannten Reaktionskomponenten nur an der Einlaßstelle des Rohrreaktors, dadurch gekennzeichnet, daß man die Temperatur in einem ersten Reaktionsabschnitt auf etwa 240°C begrenzt, nach Absinken der Temperatur um 5 bis 20°C am Beginn eines zweiten Reaktionsabschnitts weiteren Initiator zudosiert und die Reaktion bei Temperaturen bis zu 300°C zu Ende führt.

2. Verfahren nach Anspruch 1, dadurch gekennzeichnet, daß man bei Drücken von 1700 bis 3500 bar polymerisiert.

## Claims

1. A process for the preparation of a copolymer of ethylene with up to 4 mol % of polymerized $C_3$-$C_6$-alkenecarboxylic acids or esters of these acids of not more than 14 carbon atoms or a mixture of these monomers in a continuously operated tubular reactor at from 500 to 5,000 bar and at elevated temperatures in the presence of a free radical initiator by adding a mixture of the stated reaction components only at the inlet point of the tubular reactor, wherein the temperature in a first reaction section is limited to about 240°C, a further initiator is metered in after decreasing the temperature by from 5 to 20°C at the beginning of a second reaction section, and the reaction is completed at temperatures of up to 300°C.

2. A process as claimed in claim 1, wherein polymerization is carried out at from 1,700 to 3,500 bar.

## Revendications

1. Procédé de préparation de copolymères de l'éthylène avec, en liaison polymère, jusqu'à 4% en moles d'acides alcènecarboxyliques en $C_3$-$C_6$, d'esters de ces acides renfermant au total jusqu'à 14 atomes de carbone, ou de mélanges de ces monomères, dans un réacteur tubulaire fonctionnant en continu, sous des pressions de 500 à 5000 bar et à température élevée, en présence d'initiateurs radicalaires qui se décomposent, par addition d'un mélange desdits composants réactionnels au seul point d'entrée du réacteur tubulaire, caractérisé en ce qu'on limite la température à 240°C environ dans une première zone de réaction, on ajoute une quantité supplémentaire d'initiateur au début d'une seconde zone de réaction après abaissement de la température de 5 à 20°C, et on mène à bonne fin la réaction à des températures allant jusqu'à 300°C.

2. Procédé selon la revendication 1, caractérisé en ce qu'on polymérise sous des pressions de 1700 à 3500 bar.